# EUROPÄISCHE PATENTSCHRIFT

(11) **EP 1 638 803 B1**
(45) Veröffentlichungstag und Bekanntmachung des Hinweises auf die Patenterteilung: **20.12.2006**
(21) Anmeldenummer: 04738814.5
(22) Anmeldetag: 30.06.2004
(51) Int. Cl.: B60N 2/28, B60R 7/04

(54) **KINDERSITZ ZUR ANBRINGUNG AN EINEN FAHRZEUGSITZ**
CHILD SEAT FOR MOUNTING ON A VEHICLE SEAT
SIEGE D'ENFANT A MONTER SUR UN SIEGE DE VEHICULE

(30) Priorität: 02.07.2003 DE 10329923
(43) Veröffentlichungstag der Anmeldung: 29.03.2006
(73) Patentinhaber: Concord GmbH, 95346 Stadtsteinach (DE)
(72) Erfinder: KÖNIG, Walter, 72525 Münsingen (DE); SCHOBERT, Uwe, 95158 Kirchenlamitz (DE)
(74) Vertreter: Zinsinger, Norbert
(86) Internationale Anmeldenummer: PCT/DE2004/001368
(87) Internationale Veröffentlichungsnummer: WO 2005/002908

(56) Entgegenhaltungen:
- EP-A- 0 049 680
- EP-A- 0 094 913
- EP-A- 0 197 910
- EP-A- 0 331 299
- EP-A- 0 751 035
- EP-A- 0 949 113
- DE-U- 9 013 833
- DE-U- 9 310 251
- US-A- 4 971 392
- US-B1- 6 561 582

## Beschreibung

Die Erfindung betrifft einen Kindersitz gemäß dem Oberbegriff des Anspruches 1 zur Anbringung an einem eine in Fahrtrichtung nach vorne oben geneigte Sitzfläche aufweisenden Fahrzeugsitz, wobei der Kindersitz ein Basisteil und eine auf dem Basisteil angeordnete Sitzschale aufweist.

Derartige Kindersitze werden auf der nach vorne oben geneigten Sitzfläche eines Fahrzeugsitzes entweder in Fahrtrichtung angeordnet und in der Regel mit Hilfe des fahrzeugeigenen Sicherheitsgutsystems am Fahrzeugsitz festgelegt, oder die Kindersitze werden auf dem jeweiligen Fahrzeugsitz gegen die Fahrtrichtung orientiert angeordnet. Infolge der nach vorne oben geneigten Sitzfläche des Fahrzeugsitzes ist die Neigung der Sitzschale bei entgegen der Fahrtrichtung orientiert angeordnetem Kindersitz zu steil, das heißt der Sitzkomfort für ein im Kindersitz befindliches Kind eingeschränkt.

Aus der EP 0949113 A2 ist ein Kindersitz bekannt, der zur Anbringung an einem Fahrzeugsitz vorgesehen ist, der eine in Fahrtrichtung nach vorne oben geneigte Sitzfläche aufweist. Dieser bekannte Kindersitz weist ein Basisteil und eine auf dem Basisteil angeordnete Sitzschale auf. Das Basisteil weist eine ebene Grundfläche auf. An der Grundfläche des Basisteiles ist ein Keilelement vorgesehen, das um eine Schwenkachse verschwenkbar ist. Die Schwenkachse ist in einem mittleren Bereich der Grundfläche vorgesehen, so dass sich ein vorderseitiger und ein rückseitiger Grundflächenabschnitt ergibt. Diese beiden Grundflächenabschnitte schließen miteinander einen gestreckten Winkel, d. h. einen Winkel von 180° ein.

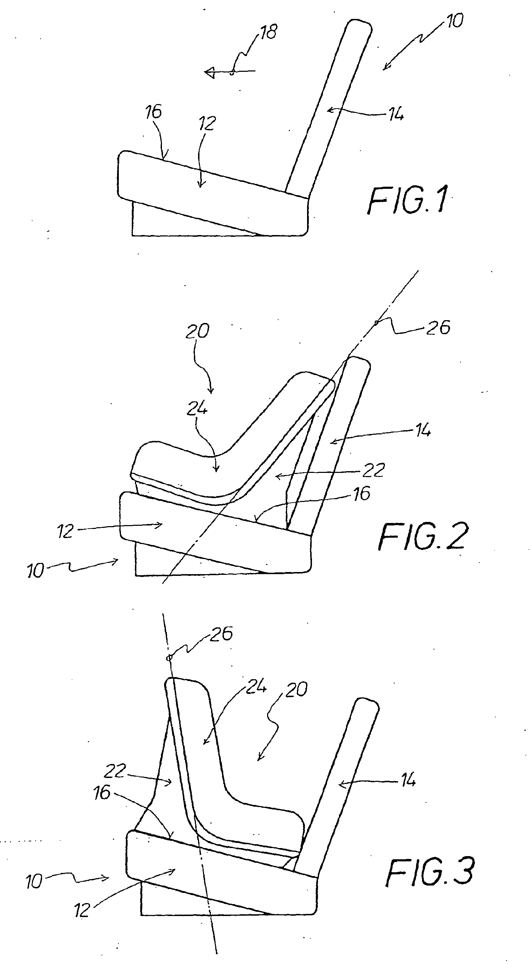

Aus der EP-A-0751035 ist ein Kindersitz bekannt, der zur Anbringung an einem Fahrzeugsitz vorgesehen ist, wobei der Fahrzeugsitz eine in Fahrtrichtung nach vorne oben geneigte Sitzfläche aufweist. Dieser bekannte Kindersitz weist eine Sitzschale auf, die mit einem Basisteil kombiniert sein kann, aber nicht jederzeit kombiniert ist. Das Basisteil dient dort nur zur Erhöhung der Sitz- bzw. Liegeposition der Sitzschale. Die Sitzschale ist rückseitig und unterseitig mit Rippen ausgebildet. Der Übergang zwischen den rückseitigen und den unterseitigen Rippen ist geradlinig ausgebildet und schließt mit diesen jeweils einen stumpfen Winkel ein; er dient als ebene Auflagefläche, wenn der Kindersitz entgegen der Fahrtrichtung positioniert wird, wie die Fig. 1 bis 4 zeigen. Diese Auflagefläche ist jedoch relativ klein, weshalb dort zusätzlich noch U-förmige Stangen zum Abstützen des Kindersitzes erforderlich sind.

Aus der US 6 561 582 B1 ist ein Kindersitz bekannt, der zur Anbringung an einem Fahrzeugsitz vorgesehen ist, wobei der Fahrzeugsitz eine Sitzfläche besitzt, die in Fahrtrichtung nach vorne oben geneigt ist. Dieser Kindersitz weist eine Sitzplatte und eine Rückenlehne auf, wobei die Sitzplatte mit einer ebenen Grundfläche ausgebildet ist. Zwischen der ebenen Grundfläche der Sitzplatte und der geneigten Sitzfläche des Fahrzeugsitzes ist ein Keilelement anordenbar, dessen Keilwinkel wunschgemäß einstellbar ist, um den entgegen der Fahrtrichtung zu positionierenden Kindersitz mit seiner Rückenlehne von der Rückenlehne des Fahrzeugsitzes ausreichend weit zu beabstanden. Dieses bekannte Keilelement ist nicht mit dem Basisteil eines Kindersitzes verstellbeweglich verbunden, sondern vom Kindersitz gleichsam unabhängig in seinen Keilwinkel einstellbar.

Aus der DE 90 13 833 U1 ist ein Kindersitz mit einer Sitzschale bekannt, die eine ebene Grundfläche aufweist. Zwischen der ebenen Grundfläche und der nach vorne oben geneigten Sitzfläche eines Fahrzeugsitzes ist ein Keilelement einlegbar, um die Neigung des Kindersitzes gegenüber dem Fahrzeugsitz - bei einer Anordnung des Kindersitzes entgegen der Fahrtrichtung - einstellen zu können.

Ein Kindersitz der eingangs genannten Art ist aus der EP-A-0049680 bekannt. Bei diesem bekannten Kindersitz ist das Keilelement um eine Schwenkachse verschwenkbar, so dass beim Verschwenken des Keilelementes vom vorderseitigen Grundflächenabschnitt des Basisteiles zum rückseitigen Flächenabschnitt - und zurück - in der lotrechten Richtung zur Schwenkachse ein ausreichend großes Raumangebot zur Verfügung stehen muss.

Die DE 93 10 251 U1 offenbart einen Zwischenlegesitz mit verschließbarem Hohlraum.

Der Erfindung liegt die Aufgabe zugrunde, einen Kindersitz der eingangs genannten Art zu schaffen, der einfach ausgebildet ist und der nicht nur bei Anordnung in Fahrtrichtung sondern auch bei Anordnung entgegen der Fahrtrichtung jeweils den gleichen Sitzkomfort aufweist, wobei der Raumbedarf bei der Verstellung des Keilelementes vom vorder- zum rückseitigen Grundflächenabschnitt des Basisteiles des Kindersitzes - und zurück - relativ klein ist.

Diese Aufgabe wird bei einem Kindersitz der eingangs genannten Art erfindungsgemäß durch die Merkmale des Patentanspruches 1 gelöst.

Das Keilelement und der vorder- und rückseitige Grundflächenabschnitt sind aneinander angepasst derartig ausgebildet, dass das Keilelement und der jeweilige, an das Keilelement angrenzende Grundflächenabschnitt eine gemeinsame ebene Auflagefläche bilden. Das Keilelement ergänzt den stumpfen Winkel des vorderseitigen und des rückseitigen Grundflächenabschnittes der Grundfläche des Basisteiles auf 180 Winkelgrad, so dass das Keilelement und das jeweils daran anschließende Grundflächenelement gemeinsam eine ebene Auflagefläche bilden. Durch diese ebene Auflagefläche ergibt sich in vorteilhafter Weise eine großflächige Auflage des Kindersitzes auf der Sitzfläche des Fahrzeugsitzes und somit ein stabiler Stand des Kindersitzes. Das ist aus sicherheitsrelevanten Gründen von Vorteil.

Zur Anordnung des Kindersitzes in Fahrtrichtung ist das Keilelement am rückseitigen Grundflächenabschnitt vorgesehen. Bei der Anordnung des Kindersitzes entgegen der Fahrtrichtung ist das Keilelement am vorderseitigen Grundflächenabschnitt des Basisteiles angeordnet. Auf diese Weise ergibt sich in bezug auf den Fahrzeugboden eine Neigung der Sitzschale, die bei Anordnung des Kindersitzes in Fahrtrichtung und bei Anordnung des Kindersitzes entgegen der Fahrtrichtung quasi gleich groß sein kann. Das bedeutet, dass der Sitzkomfort bei Anordnung des Kindersitzes in Fahrtrichtung und bei Anordnung entgegen der Fahrtrichtung gleich groß ist.

Dadurch, dass das Keilelement am Basisteil entlang einer Führung verstellbar ist, ergibt sich der Vorteil, dass das Keilelement in einfacher Weise entweder am vorderseitigen Grundflächenabschnitt oder am rückseitigen Grundflächenabschnitt der Grundfläche des Basisteiles angeordnet werden kann, um bei Vorwärtsorientierung und bei Rückwärtsorientierung des Kindersitzes in bezug auf die Fahrtrichtung die mindestens annähernd gleiche komfortable flache Neigung der Sitzschale zu gewährleisten.

Erfindungsgemäß kann das Keilelement mindestens einen von außen zugänglichen Hohlraum aufweisen, der einen Stauraum bildet. Dieser Stauraum kann für Utensilien benutzt werden, wie sie für Kinder wünschenswert oder gegebenenfalls notwendig sind. Bei diesen Utensilien kann es sich z.B. um Windeln oder dergleichen handeln. Der Hohlraum ist zweckmäßigerweise verschließbar, um die besagten, im Hohlraum befindlichen Utensilien sicher und unverlierbar unterzubringen.

Bei dem erfindungsgemäßen Kindersitz kann die Sitzschale mit dem Basisteil unbeweglich verbunden oder mit diesem integral ausgebildet sein; es ist jedoch auch möglich, dass die Sitzschale am Basisteil zwischen verschiedenen Positionen hin und her verstellbar ist. Bei diesen Positionen handelt es sich beispielsweise um wenigstens eine Sitzposition und um mindestens eine Liegeposition.

Weitere Einzelheiten, Merkmale und Vorteile ergeben sich aus der nachfolgenden Beschreibung eines in der Zeichnung schematisch dargestellten Ausführungsbeispieles des erfindungsgemäßen Kindersitzes in Kombination mit einem ebenfalls nur schematisch angedeuteten Fahrzeugsitz.

Es zeigen:
- Figur 1: schematisch in einer Seitenansicht einen Fahrzeugsitz,
- Figur 2: den Fahrzeugsitz gemäß Figur 1 in Kombination mit einem bekannten Kindersitz, der in Fahrtrichtung orientiert auf der nach vorne oben geneigten Sitzfläche des Fahrzeugsitzes angeordnet ist,
- Figur 3: den bekannten Kindersitz gemäß Figur 2, der auf dem Fahrzeugsitz entgegen der Fahrtrichtung angeordnet ist,
- Figur 4: einen erfindungsgemäßen Kindersitz auf einem Fahrzeugsitz in Fahrtrichtung orientiert angeordnet,
- Figur 5: den erfindungsgemäßen Kindersitz gemäß Figur 4 entgegen der Fahrtrichtung orientiert auf einem Fahrzeugsitz angeordnet,
- Figur 6: eine schematische Darstellung eines erfindungsgemäßen Kindersitzes in Kombination mit einem entlang einer Führung am Basisteil verstellbaren Keilelement,
- Figur 7: den Kindersitz gemäß Figur 6, wobei das Keilelement am rückseitigen Grundflächenabschnitt der Grundfläche des Basisteiles fixiert ist,
- Figur 8: den Kindersitz gemäß Figur 6, wobei das Keilelement am vorderseitigen Grundflächenabschnitt der Grundfläche des Basisteiles fixiert ist,

Figur 1 zeigt schematisch in einer Seitenansicht einen Fahrzeugsitz 10 mit einer Sitzplatte 12 und einer Rückenlehne 14. Die Sitzplatte 12 weist eine in Fahrtrichtung nach vorne oben geneigte Sitzfläche 16 auf. Die Fahrtrichtung ist durch den Pfeil 18 angedeutet.

Figur 2 zeigt den Fahrzeugsitz 10 gemäß Figur 1, auf dessen Sitzfläche 16 ein bekannter Kindersitz 20 angeordnet und mittels eines (nicht dargestellten) fahrzeugeigenen Dreipunktsicherheitsgurtsystemes festgelegt ist. Der Kindersitz 20 weist ein Basisteil 22 und eine auf dem Basisteil 22 angeordnete Sitzschale 24 auf. Das Basisteil 22 und die Sitzschale 24 sind derartig gestaltet, dass der in Fahrtrichtung orientierte Kindersitz 20 eine passende Neigung einnimmt. Diese Neigung ist durch die dünne strichpunktierte Linie 26 angedeutet. Wie aus Figur 3 ersichtlich ist, ist diese Neigung 26 jedoch sehr steil, wenn der Kindersitz 20 am Fahrzeugsitz 10 entgegen der Fahrtrichtung 18 orientiert ist. Das wirkt sich auf dem Sitzkomfort eines im Kindersitz 20 befindlichen Kindes entsprechend negativ aus.

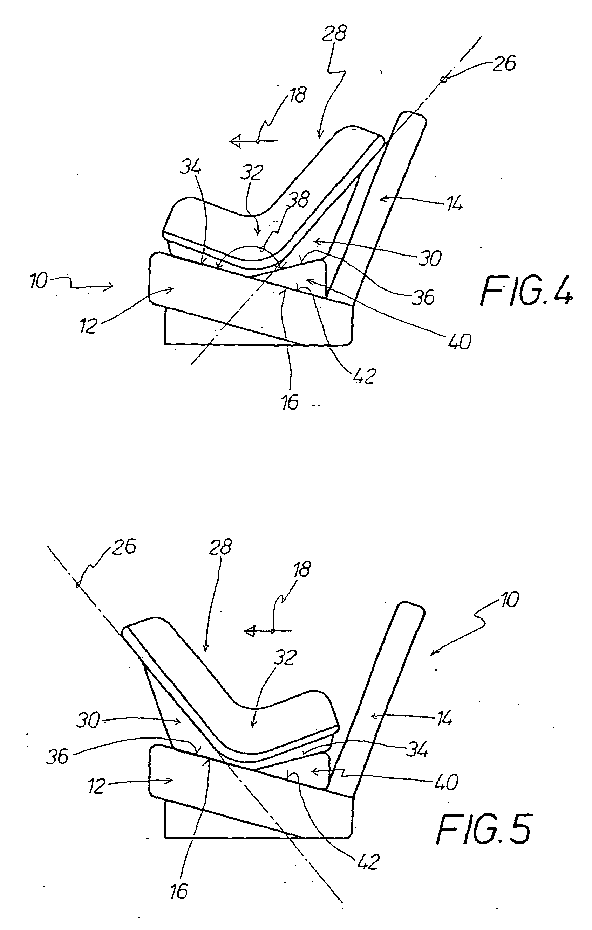

Hier schafft der erfindungsgemäße Kindersitz 28 auf einfache Weise Abhilfe, wie er nachfolgend in Verbindung mit den Figuren 4 bis 8 beschrieben wird.

Figur 4 zeigt - der Figur 1 entsprechend - einen Fahrzeugsitz 10 mit einer in Fahrtrichtung 18 nach vorne oben geneigten Sitzfläche 16, und einen erfindungsgemäßen Kindersitz 28 mit einem Basisteil 30, auf dem eine Sitzschale 32 vorgesehen ist. Die Sitzschale 32 kann mit dem Basisteil 30 fest verbunden sein. Die Sitzschale 32 kann an dem Basisteil jedoch auch zwischen verschiedenen Positionen hin und her verstellbar angebracht sein.

Das Basisteil 30 weist eine Grundfläche mit einem vorderseitigen Grundflächenabschnitt 34 und mit einem rückseitigen Grundflächenabschnitt 36 auf. Der vorderseitige und der rückseitige Grundflächenabschnitt 34 und 36 schließen miteinander einen stumpfen Winkel 38 ein.

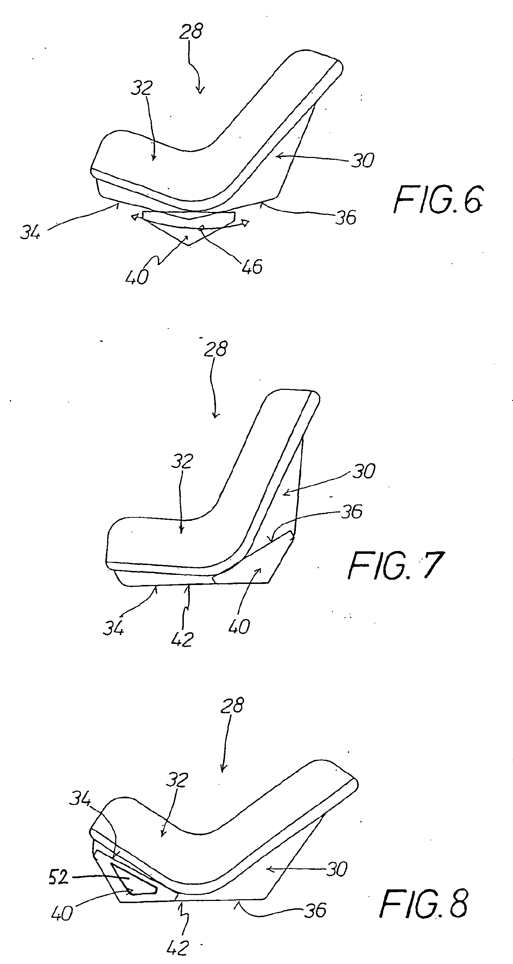

Der erfindungsgemäße Kindersitz 28 ist mit einem Keilelement 40 kombiniert, das entweder am vorderseitigen oder am rückseitigen Grundflächenabschnitt 34 oder 36 derartig angeordnet ist, dass das Keilelement 40 und der jeweilige, an das Keilelement 40 angrenzende Grundflächenabschnitt 34 oder 36 eine gemeinsame ebene Auflagefläche 42 (siehe die Figuren 7, 8) bilden. Auf diese Weise ergibt sich ein stabiler Stand des Kindersitzes 28 auf der Sitzfläche 16 des Fahrzeugsitzes 10. Die Festlegung des Kindersitzes 28 auf dem Fahrzeugsitz 10 erfolgt mit Hilfe eines fahrzeugeigenen (nicht dargestellten) Dreipunktsicherheitsgurtsystemes. Mit Hilfe des Dreipunktsicherheitsgurtsystems wird gleichzeitig auch ein Kind im Kindersitz 28 festgelegt.

In Figur 4 ist das Keilelement 40 am rückseitigen Grundflächenabschnitt 36 vorgesehen und der Kindersitz 28 in Fahrtrichtung 18 nach vorne orientiert. Demgegenüber ist in Figur 5 das Keilelement 40 am vorderseitigen Grundflächenabschnitt 34 vorgesehen und der Kindersitz 28 entgegen der Fahrtrichtung 18 orientiert. Die durch die strichpunktierte Linie 26 angedeutete Neigung des Kindersitzes 28 in bezug auf den Boden des Fahrzeugs ist bei Anordnung des Kindersitzes 28 in Fahrtrichtung 18 und entgegen der Fahrtrichtung 18 mindestens annähernd gleich groß, wie sich durch einen Vergleich der Figuren 4 und 5 ohne weiteres ergibt.

Figur 6 verdeutlicht eine Ausbildung des erfindungsgemäßen Kindersitzes 28 mit einem Keilelement 40, das am Basisteil 30 des Kindersitzes 28 entlang einer Führung verstellbar ist. Das ist durch den bogenförmigen Pfeil 46 angedeutet. Die Figur 7 verdeutlicht den Kindersitz 28 gemäß Figur 6, wobei das Keilelement 40 am rückseitigen Grundflächenabschnitt 36 vorgesehen und fixiert ist. Demgegenüber verdeutlicht die Figur 8 den Kindersitz 28 gemäß Figur 6, wobei das Keilelement 40 am vorderseitigen Grundflächenabschnitt 34 des Basisteiles 30 des Kindersitzes 28 vorgesehen und fixiert ist.

Das Keilelement 40 kann mit mindestens einem von außen zugänglichen Hohlraum 52 ausgebildet sein, der einen Stauraum bildet. Ein solcher Hohlraum 52 ist in Figur 8 schematisch angedeutet.

Gleiche Einzelheiten sind in den Figuren 1 bis 8 jeweils mit denselben Bezugsziffern bezeichnet, so dass es sich erübrigt, in Verbindung mit allen Figuren alle Einzelheiten jeweils detailliert zu beschreiben.

## Patentansprüche

1. Kindersitz zur Anbringung an einem eine in Fahrtrichtung (18) nach vorne oben geneigte Sitzfläche (16) aufweisenden Fahrzeugsitz (10), wobei der Kindersitz (28) ein Basisteil und eine auf dem Basisteil angeordnete Sitzschale aufweist, das Basisteil (30) eine Grundfläche (34, 36) mit einem vorderseitigen Grundflächenabschnitt (34) und mit einem rückseitigen Grundflächenabschnitt (36) aufweist, die miteinander einen stumpfen Winkel (38) einschließen, und wahlweise am vorderseitigen oder am rückseitigen Grundflächenabschnitt (34 oder 36) ein Keilelement (40) anliegt, wobei das Keilelement (40) und der vorderseitige und rückseitige Grundflächenabschnitt (34 und 36) aneinander angepasst derartig ausgebildet sind, dass das Keilelement (40) und der jeweilige, an das Keilelement (40) angrenzende Grundflächenabschnitt (34 oder 36) eine gemeinsame ebene Auflagefläche (42) bilden,
**dadurch gekennzeichnet,**
**dass** das Keilelement (40) am Basisteil (30) entlang einer Führung verstellbar ist.

2. Kindersitz nach Anspruch 1,
**dadurch gekennzeichnet,**
**dass** das Keilelement (40) mindestens einen von außen zugänglichen Hohlraum (52) aufweist, der einen Stauraum bildet.

3. Kindersitz nach Anspruch 2,
**dadurch gekennzeichnet,**
**dass** der Hohlraum (53) verschließbar ist.

4. Kindersitz nach einem der vorhergehenden Ansprüche,
**dadurch gekennzeichnet,**
**dass** die Sitzschale (32) am Basisteil (30) zwischen verschiedenen Positionen hin und her verstellbar ist.

## Claims

1. Child seat for mounting on a vehicle seat (10) having a seat surface (16) which is inclined forward and upward in the direction of travel (18), the child seat (28) having a base part and a seat shell arranged on the base part, the base part (30) having a base area (34, 36) with a front base area section (34) and with a rear base area section (36), which base area sections enclose an obtuse angle (38) with each other, and a wedge element (40) bearing either against the front or the rear base area section (34 or 36), the wedge element (40) and the front and rear base area sections (34 and 36), which are matched to one another, being designed in such a manner that the wedge element (40) and the respective base area section (34 or 36) adjoining the wedge element (40) form a common level bearing surface (42), **characterized in that** the wedge element (40) can be displaced on the base part (30) along a guide.

2. Child seat according to Claim 1, **characterized in that** the wedge element (40) has at least one hollow space (52) which is accessible from the outside and forms a storage space.

3. Child seat according to Claim 2, **characterized in that** the hollow space (53) can be closed.

4. Child seat according to one of the preceding claims, **characterized in that** the seat shell (32) can be displaced to and fro on the base part (30) between different positions.

## Revendications

1. Siège pour enfant à placer sur un siège de véhicule (10) présentant une assise (16) inclinée vers l'avant dans le sens de marche (18) en haut, le siège pour enfant (28) présentant une partie de base et une coque de siège disposée sur la partie de base, la partie de base (30) présentant une surface de base (34, 36) avec une partie de surface de base (34) côté avant et avec une partie de surface de base (36) côté arrière, qui forment entre elles un angle obtus (38), et un élément de clavette (40) s'appuyant au choix sur la partie de surface de base avant ou la partie de surface de base arrière (34 et 36), l'élément de clavette (40) et la partie de surface de base côté avant et la partie de surface de base arrière (34 et 36) étant réalisées de façon adaptée l'une à l'autre, de telle sorte que l'élément de clavette (40) et la partie de surface de base (34 ou 36) respective, contiguë à l'élément de clavette (40), forment une surface d'appui (42) plane et commune,
**caractérisé en ce que**
l'élément de clavette (40) peut être déplacé sur la partie de base (30) le long d'un guide.

2. Siège pour enfant selon la revendication 1,
**caractérisé en ce que**
l'élément de clavette (40) présente au moins une cavité (52) accessible par l'extérieur, qui forme un espace de rangement.

3. Siège pour enfant selon la revendication 2,
**caractérisé en ce que**
la cavité (53) peut être fermée.

4. Siège pour enfant selon l'une quelconque des revendications précédentes,
**caractérisé en ce que**
la coque de siège (32) peut être déplacée sur la partie de base (30) d'un côté et de l'autre entre différentes positions.
